## Europäisches Patentamt
## European Patent Office
## Office européen des brevets

(19)

(11) Veröffentlichungsnummer: **0 033 849**
**B1**

(12)

# EUROPÄISCHE PATENTSCHRIFT

(45) Veröffentlichungstag der Patentschrift:
17.08.83

(51) Int. Cl.³: **B 01 D 1/26, F 25 B 27/02**

(21) Anmeldenummer: 81100242.7

(22) Anmeldetag: 15.01.81

(54) Verfahren zum Rückgewinnen von Wärmeenergie, die in den Brüden von für thermische Stofftrennprozesse eingesetzten Mehrstufenverdampfern enthalten ist, und Vorrichtung zur Durchführung des Verfahrens.

(30) Priorität: 06.02.80 DE 3004197

(43) Veröffentlichungstag der Anmeldung:
19.08.81 Patentblatt 81/33

(45) Bekanntmachung des Hinweises auf die Patenterteilung:
17.08.83 Patentblatt 83/33

(84) Benannte Vertragsstaaten:
AT FR GB SE

(56) Entgegenhaltungen:
CH-A-180 774
DE-A-2 554 937
FR-A-772 799
NL-A-7 800 526
US-A-2 990 694
US-A-3 236 064

(73) Patentinhaber: BUCKAU - WALTHER Aktiengesellschaft,
Lindenstrasse 43, D-4048 Grevenbroich 1 (DE)

(72) Erfinder: Franzen, Paul, Am Hof 2, D-5400 Koblenz 1 (DE)

(74) Vertreter: Dehmer, Walter, Dipl.-Ing., Altendorfer
Strasse 103, D-4300 Essen 1 (DE)

## Verfahren zum Rückgewinnen von Wärmeenergie, die in den Brüden von für thermische Stofftrennprozesse eingesetzten Mehrstufenverdampfern enthalten ist, und Vorrichtung zur Durchführung des Verfahrens

Die Erfindung betrifft ein Verfahren zum Rückgewinnen von Wärmeenergie, die in den Brüden von für thermische Stofftrennprozesse eingesetzten Mehrstufenverdampfern enthalten ist, und eine Vorrichtung zur Durchführung des Verfahrens.

Die Brüden der letzten Teilstufe von Mehrstufenverdampfern werden dampfförmig oder als Kondensat an die Umgebung abgeführt; gegebenenfalls kann die einzudampfende Lösung mittels des Brüdendampfes vorgewärmt werden, wobei dieser teilweise kondensiert. Da die Brüden jedoch nur so lange Wärme an die einzudampfende Lösung übertragen können, bis diese annähernd die Brüdentemperatur erreicht hat, und da der latente Wärmeinhalt der Brüden immer größer ist als die bei diesem Vorgang übertragbare Wärmemenge, muß ein beachtlicher Teil der Brüdenwärme ungenutzt an die Umgebung abgeführt werden.

Falls der Temperaturunterschied zwischen den aus der letzten Teilstufe abgezogenen Brüden und dem Frischdampf für die erste Teilstufe nicht zu groß ist und falls die Zusammensetzung und der Zustand der Brüden dies erlauben, können besondere Brüdenkompressoren zur Rückgewinnung von Prozeßdampf eingesetzt werden; der Betrieb der Brüdenkompressoren macht unter Umständen jedoch einen höheren Aufwand an Energie erforderlich als diese durch die Rückgewinnung des Prozeßdampfes einsparen.

Der Erfindung liegt die Aufgabe zugrunde, mittels eines geeigneten Verfahrens und einer Vorrichtung zur Durchführung dieses Verfahrens die in den Brüden enthaltene Wärmeenergie zur Erzeugung von Heizdampf auszunutzen, welcher einen wirtschaftlicheren Betrieb des Mehrstufenverdampfers ermöglicht. Das Verfahren und die Vorrichtung sollen also so ausgestaltet sein, daß der Energieaufwand für die Bereitstellung des Prozeßdampfes für den Mehrstufenverdampfer erheblich gesenkt wird.

Die gestellte Aufgabe wird durch ein Verfahren gelöst, welches im wesentlichen die Merkmale des Anspruchs 1 aufweist. Der der Erfindung zugrundeliegende Lösungsgedanke besteht danach darin, die Brüden eines Mehrstufenverdampfers zum Betrieb eines Wärmetransformators einzusetzen, dessen Arbeitsmittel durch ein Mehrstoff-Gemisch mit leicht siedenden Bestandteilen gebildet ist und in dem mittels der Wärme — die in mindestns einer Absorptionsstufe anfällt — Heizdampf gewonnen wird, welcher dem Mehrstufenverdampfer als Prozeßdampf zugeführt wird.

Die Erzeugung von Heizwärme höherer Temperatur aus Abwärme mittels eines einstufigen Wärmetransformators ist bereits aus der deutschen Offenlegungsschrift 2 554 937 bekannt. Die beispielsweise aus einem Kraftwerk oder einer Anlagenkühlung stammende Abwärme dient zur Beheizung eines Austreibers und eines Verdampfers, die auf ihrer Wärmeabgabeseite jeweils über eine Dampfleitung mit einem Kondensator bzw. mit einem Absorber in Verbindung stehen. Letzterer ist zusätzlich über eine mit einer Pumpe ausgestattete Zuführleitung und eine mit einer Drosseleinheit ausgestattete Rückführleitung mit der Wärmeabgabeseite des Austreibers verbunden. Der Kondensator ist auf seiner Wärmeabgabeseite über eine mit einer Pumpe ausgestattete Kondensatleitung zusätzlich mit der Wärmeaufnahmeseite des Verdampfers zusammengeschaltet.

Der Kondensator selbst gibt Wärme von niedrigerer Temperatur in einem Kühlturm an ein Kühlmittel, vorzugsweise Luft, ab. Zur Anpassung an unterschiedliche Wärmeleistungen kann in den Abwärmekreislauf zusätzlich ein Wärmeübertrager eingeschaltet sein, über den gegebenenfalls ein veränderbarer Anteil der Abwärme gekühlt wird. Die in Rede stehende Vorveröffentlichung vermittelt ausschließlich die Lehre, aus Abwärme mittels eines einstufigen Wärmetransformators Heizwärme höherer Temperatur für einen anderen Verbraucher zur Verfügung zu stellen. Im Gegensatz dazu wird mit der vorliegenden Erfindung erstmals vorgeschlagen, Mehrstufenverdampfer in der Weise mit einem ein- oder mehrstufigen Wärmetransformator zu betreiben, daß in mindestens einer Absorptionsstufe unter Ausnutzung der Brüdenwärme Heizdampf gewonnen wird, welcher dem Mehrstufenverdampfer selbst wieder als Prozeßdampf zugeführt wird; der ursprünglich offene Kreislauf des Mehrstufenverdampfers wird dadurch in einen teilweise geschlossenen Kreislauf umgewandelt, wobei ein erhöhter Bedarf an Nutzwärme selbsttätig die Zufuhr einer größeren Wärmemenge in Form von Heizdampf zur Folge hat. Während der erwähnte Stand der Technik die Zwischenschaltung eines abschaltbaren Wärmetransformators zwischen Abwärmequelle und Verbraucher lehrt, beinhaltet der der Erfindung zugrundeliegende Lösungsgedanke, einen Wärmetransformator mit einem Mehrstufenverdampfer zu einem teilweise geschlossenen Energiekreislauf zusammenzufassen, der ohne Störung des Verfahrensablaufs und der Energiebilanz nicht unterbrochen werden kann.

Vorzugsweise werden die Brüden zumindest einer Austreibstufe und zumindest einer Verdampfungsstufe des Wärmetransformators zugeführt, wobei in der Austreibstufe die leicht siedenden Bestandteile und bei gegenüber dem Druck in der Austreibstufe erhöhtem Druck in der Verdampfungsstufe die in diese eintretenden Leichtsiedebestandteile verdampft werden; die unter dem höheren Druck stehenden dampfförmigen Leichtsiedebestandteile werden mit dem nach dem Austreibvorgang vorliegenden Rest, dem sogenannten Restgemisch, des Mehrstoffgemisches der Absorptionsstufe zugeführt (Anspruch 2). Der Absorptionsvorgang sollte in der Weise gesteuert werden, daß das in die Austreibstufe zurückgeführte Mehrstoffgemisch wieder die ursprünglich vorhandene Zusammensetzung aufweist.

Es hat sich als vorteilhaft erwiesen, das Restgemisch vor dem Eintritt in die Absorptionsstufe mittels des diese verlassenden gesättigten Mehrstoffgemisches zu erwärmen (Anspruch 3).

Falls die Brüdentemperatur zur Erzeugung von Heizdampf mit einer bestimmten Temperatur nicht ausreicht, kann das Verfahren in der mit dem Anspruch 4 beschriebenen Weise ausgestaltet sein, das heißt, die dampfförmigen Leichtsiedebestandteile des Mehrstoffgemisches werden vor dem Eintritt in die Verdampfungsstufe einem oder mehreren Absorptionsabschnitten zugeführt; in diesen findet jeweils ein mit Wärmeabgabe verbundener Absorptionsvorgang und ein Austreibvorgang statt, in dem wiederum eine Aufteilung des Mehrstoffgemisches in Leichtsiedebestandteile und in ein Restgemisch bewirkt wird.

Die der Erzeugung des Heizdampfes vorausgehenden Verflüssigungsvorgänge laufen zweckmäßigerweise bei Umgebungstemperatur ab (Anspruch 5). Sowohl die Kondensationsstufe als auch sämtliche gegebenenfalls vorhandene Zusatz-Absorptionsstufen arbeiten danach bei der genannten Temperatur.

Als geeignetes Mehrstoffgemisch mit leicht siedenden Bestandteilen findet vorteilhaft ein Ammoniak-Wasser-Gemisch Verwendung (Anspruch 6). Je nach Bedarfs- und Anwendungsfall können auch andere Mehrstoffgemische eingesetzt werden.

Der in einer Absorptionsstufe gewonnene Heizdampf kann insbesondere der ersten Teilstufe des Mehrstufenverdampfers als Prozeßdampf zugeführt werden (Anspruch 7). Zur Gewinnung des Heizdampfes dient vorzugsweise zumindest ein Teilstrom des Heizdampfkondensats, welches die erste Teilstufe des Mehrstufenverdampfers verläßt und in die Absorptionsstufe eingeleitet wird (Anspruch 8).

Das Verfahren kann insbesondere dadurch weiter ausgestaltet sein, daß es zusätzlich die Merkmale eines oder mehrerer der bisher nicht erwähnten Ansprüche 10 bis 13 aufweist. Insbesondere ist es auch möglich, den Heizdampf je nach der erreichten Temperatur nicht dem Frischdampf für die erste Teilstufe, sondern den Brüden einer der vorderen Teilstufen des Mehrstufenverdampfers beizumischen.

Die zur Durchführung des Verfahrens geeignete Vorrichtung, welche aus einem an einem Mehrstufenverdampfer angekoppelten Wärmetransformator besteht, weist als wesentliche Bestandteile einen Austreiber zum teilweisen Verdampfen der leicht siedenden Bestandteile des in ihn eingeleiteten Mehrstoffgemisches, einen Kondensator zur Verflüssigung der aus dem Austreiber abgezogenen dampfförmigen Leichtsiedebestandteile des Mehrstoffgemisches, einen Verdampfer und einen Absorber auf, welcher über ein Leitungspaar zusätzlich mit dem Austreiber in Verbindung steht und auf der Wärmeaufnahmeseite mit einem Dampferzeuger ausgestattet ist, dessen Heizdampfleitung an den Mehrstufenverdampfer angeschlossen ist.

Das aus dem Austreiber stammende schwächer konzentrierte Restgemisch ist bei höherem Druck in der Lage, die ebenfalls eingeleiteten dampfförmigen Leichtsiedebestandteile so weit zu absorbieren, bis sich die ursprüngliche Konzentration des Mehrstoffgemisches wieder eingestellt hat. Bei diesem Absorptionsvorgang wird Wärme frei, deren Temperatur im stationären Betriebszustand deutlich oberhalb der Brüdentemperatur liegt.

Der mit einer Wärmetauschereinheit ausgestattete Dampferzeuger kann insbesondere an die Frischdampfleitung in die erste Teilstufe des Mehrstufenverdampfers (Anspruch 20) oder auch an eine Brüdenleitung einer der nachfolgenden Teilstufen angeschlossen sein; der Heizdampf kann insbesondere aus dem Kondensat erzeugt werden, welches der ersten Teilstufe des Mehrstufenverdampfers entnommen wird.

Die erfindungsgemäße Vorrichtung kann insbesondere dadurch weiter ausgestaltet sein, daß sie zusätzlich die Merkmale eines oder mehrerer der Ansprüche 15 bis 20 aufweist.

Falls die Temperatur der aus dem Mehrstufenverdampfer abgezogenen Brüden nicht dazu ausreicht, Heizdampf einer bestimmten vorgegebenen Temperatur zu erzeugen, kann die Vorrichtung mit einem oder mehreren Zusatz-Wärmetransformatoren ausgestattet sein (Anspruch 16). Diese bestehen jeweils aus einem Zusatz-Absorber, einem Zusatz-Austreiber und diese beiden Teile verbindender Zuführ- und Rückführleitung; die Zuführleitung ist dabei zum Zwecke der Druckerhöhung des in den Absorber eingeleiteten Restgemisches mit einer Pumpe ausgestattet, während die Rückführleitung zur Absenkung des Druckes des wieder gesättigten Mehrstoffgemisches auf das Druckniveau des Zusatz-Absorbers eine Drosseleinheit aufweist.

Zum Zwecke einer weiteren Temperaturerhöhung kann die Vorrichtung auch mit mehreren kaskadenförmig hintereinandergeschalteten Zusatz-Wärmetransformatoren ausgestattet sein (vgl. Anspruch 16), wobei die in einem Absorber eines Zusatz-Wärmetransformators erzeugte Heizwärme den nachgeschalteten Austreibern und Verdampfern des nächsten Zusatz-Wärmetransformators bzw. der nächsten Zusatz-Wärmetransformatoren zugeführt wird. Die in einem oder mehreren dieser nachfolgenden Zusatz-Wärmetransformatoren erzeugte Wärme kann dem Mehrstufenverdampfer als Prozeßwärme oder aber erforderlichenfalls einem weiteren Zusatz-Wärmetransformator in der soeben beschriebenen Weise als Heizwärme zugeführt werden.

Bei einer besonders bevorzugten Ausführungsform der Vorrichtung sind sämtliche Austreiber — das heißt gegebenenfalls auch die Zusatz-Austreiber — und der Verdampfer über ein Leitungssystem mit dem Brüdenaustritt ein und derselben Teilstufe des Mehrstufenverdampfers, insbesondere mit der letzten Teilstufe, verbunden (Ansprüche 18 und 19).

Zur Verbesserung der Wärmeausbeute kann die Vorrichtung — soweit nicht zumindest ein Zusatz-Wärmetransformator vorgesehen ist — mit einem weiteren Wärmetauscher ausgestattet sein, in welchem die den Austreiber verlassenden heißen dampfförmigen Leichtsiedebestandteile das in den Verdampfer eintretende Kondensat nahezu bis zur Siedetemperatur erhitzen.

Der Erfindungsgegenstand wird nachfolgend anhand der Zeichnung und im Anschluß daran anhand dreier Anwendungsbeispiele im einzelnen erläutert. Es zeigt

Fig. 1 in schematischer Darstellung den Aufbau der neu vorgeschlagenen Vorrichtung ohne Zusatz-Wärmetransformator, wobei diese mit einem Dreistufen-Verdampfer zusammenwirkt, und

Fig. 2 in schematischer Darstellung eine Ausführungsform der neu vorgeschlagenen Vorrichtung mit Zusatz-Wärmetransformator, wobei die Vorrichtung mit einem n-Stufenverdampfer zusammenwirkt.

Der schematisch dargestellte Dreistufen-Verdampfer 1 besteht in an sich bekannter Weise aus hintereinandergeschalteten Teilstufen 2, 3 und 4. Die in die erste Teilstufe 2 einmündende Frischdampfleitung ist mit 5 bezeichnet; die den Teilstufen zugeordneten und diese zumindest teilweise miteinander verbindenden Brüdenleitungen sind mit 2', 3' und 4' bezeichnet. Die neu vorgeschlagene Vorrichtung weist als wesentliche Bestandteile einen Austreiber 6, einen Kondensator 7, einen Verdampfer 8 und einen Absorber 9 auf. Der Austreiber 6 und der Verdampfer 8 werden in dem dargestellten Ausführungsbeispiel über Leitungsabschnitte 4" bzw. 4''' mittels der durch die Brüdenleitung 4' abgezogenen Brüden geheizt. Die auf der Wärmeabgabeseite der der Teile 6 und 8 befindlichen Austritte sind schematisch mit 6' bzw. 8' bezeichnet. Der Austreiber 6 und der Kondensator 7 sind über eine Dampfleitung 6'' miteinander verbunden; letzterer steht auf der Wärmeabgabeseite über eine mit einer Pumpe 10 ausgestattete Kondensatleitung 11 mit der Wärmeaufnahmeseite des Verdampfers 8 in Verbindung. Dieser ist über eine Dampfleitung 12 an die Wärbeabgabeseite des Absorbers 9 angeschlossen. Der Absorber 9 weist auf der Wärmeabgabeseite weiterhin eine Zuführleitung 13 und eine Rückführleitung 14 auf, die beide auf der Wärmeaufnahmeseite in den Austreiber 6 einmünden. Die Leitungen 13 und 14 sind mit einer Pumpe 15 bzw. mit einer Drosseleinheit 16 ausgestattet und außerhalb dieser beiden Einrichtungen durch einen Wärmetauscher 17 hindurchgeführt.

Der Absorber 9 ist auf der Wärmeaufnahmeseite — die einen nicht dargestellten Dampferzeuger in Form einer geeigneten Wärmetauschereinheit aufweist — mit einer in die Frischdampfleitung 5 einmündenden Heizdampfleitung 18 und einer Verbindungsleitung 19 ausgestattet, welche ihrerseits an die Heizdampfkondensatleitung 20 der Teilstufe 2 des Mehrstufenverdampfers 1 angeschlossen ist.

Der Mehrstufenverdampfer 1 wird in der ersten Teilstufe 2 mit Frischdampf mit einer Temperatur von beispielsweise 100°C beheizt; die Brüden verlassen die Teilstufe 4 über die Brüdenleitung 4' mit einer Temperatur von beispielsweise 70°C. Ein Teil der Brüden wird über die Leitung 4" dem Austreiber 6 und über die Leitung 4''' dem Verdampfer 8 zugeführt, wobei die Brüden kondensieren und Wärme abgeben. In dem Austreiber 6 — in dem sich ein Ammoniak-Wasser-Gemisch mit etwa 52% Ammoniak bei einem Druck von etwa 9 bar befindet — wird durch die Kondensationswärme der Brüden nahezu reines Ammoniak ausgedampft; dieses gelangt über die Dampfleitung 6'' in den Kondensator 7, dessen Druckniveau in etwa demjenigen des Austreibers 6 entspricht.

Das in dem Kondensator 7 bei 20°C verflüssigte Ammoniak wird mittels der Pumpe 10 durch die Kondensatleitung 11 in den Verdampfer 8 befördert, in dem ein Druck von etwa 30 bar herrscht. Das Ammoniak, das bei diesem Druck eine Verdampfungstemperatur von 65°C aufweist, wird durch Aufnahme der Kondensationswärme der Brüden verdampft und über die Dampfleitung 12 in den Absorber 9 eingeleitet. Hier wird das dampfförmige Ammoniak von dem mit 47% Ammoniakgehalt schwächer konzentrierten Restgemisch absorbiert, welches aus dem Austreiber 6 über die Zuführleitung 13 in den Absorber 9 gelangt. Bei dem Absorptionsvorgang entsteht ein Naßdampfgemisch, dessen Temperatur etwa 120°C beträgt und das durch Wärmeentzug bei etwa 108°C verflüssigt wird. Die abzuführende Wärme wird dazu benutzt, mittels des zweckmäßigerweise in den Absorber 9 integrierten Dampferzeugers Heizdampf mit einer Temperatur von 100°C zu gewinnen; dieser wird über die Heizdampfleitung 18 mit dem über die Frischdampfleitung 5 zugeführten Frischdampf vermischt und der ersten Teilstufe 2 des Mehrstufenverdampfers 1 zugeführt.

Das durch den Absorptionsvorgang angereicherte Ammoniak-Wasser-Gemisch verläßt den Absorber 9 über die Rückführleitung 14 in gesättigtem Zustand, wird nach Wärmeabgabe an das schwächer konzentrierte Restgemisch im Wärmetauscher 17 mittels der Drosseleinheit 16 auf das niedrigere Druckniveau des Austreibers 6 gedrosselt und diesem wieder zugeführt.

Mit der beschriebenen Vorrichtung können aus 1 kg Brüden mit einer Temperatur von 70°C etwa 0,43 kg Heizdampf mit einer Temperatur von 100°C erzeugt werden, wobei gleichzeitig die zum Kondensieren der Brüden erforderliche Kühlleistung um etwa 42% gesenkt werden kann. Der spezifische Dampfverbrauch des mit der neuen Vorrichtung ausgestatteten Dreistufenverdampfers liegt um etwa 35% niedriger als der spezifische Dampfverbrauch eines normalen Dreistufenverdampfers.

Falls der Temperaturabstand zwischen der Temperatur des Frischdampfes und der Temperatur der Brüden aus der letzten Teilstufe des Mehrstufenverdampfers so groß ist, daß er mit der soeben beschriebenen Ausführungsform nicht überbrückt werden kann, kann die neu vorgeschlagene Vorrichtung mit einem Zusatz-Wärmetransformator 21 ausgestattet sein. Dieser weist als wesentliche Bestandteile einen Zusatz-Absorber 22 und einen Zusatz-Austreiber 23 auf, die auf der Wärmeabgabeseite bzw. auf der Wärmeaufnahmeseite über ein Leitungspaar mit einer Zuführleitung 24 und einer Rückführleitung 25 miteinander verbunden sind. Die Leitungen 24 und 25 sind in der gleichen Weise wie die Leitungen 14 und 13 mit einer Drosseleinheit 26 und einer Pumpe 27 ausgestattet sowie durch einen Wärmetauscher 28 hindurchgeführt.

Der Zusatz-Absorber 22 — der beispielsweise bei 20°C gekühlt ist — ist über die Dampfleitung 6" mit dem Austreiber 6 verbunden, der Zusatz-Austreiber 23 über eine Dampfleitung 6''' mit dem Kondensator 7. Der Zusatz-Austreiber 23 ist über eine Zusatzleitung 29 mit der Brüdenleitung 4' der letzten Teilstufe n eines n-Stufenverdampfers verbunden; das Teil 23 wird also ebenso wie der Austreiber 6 und der dem Kondensator 7 nachgeschaltete Verdampfer 8 mit den Brüden der letzten Teilstufe n beheizt. Der Brüdenaustritt aus dem Zusatz-Austreiber 23 ist mit 23' bezeichnet.

## Anwendungsbeispiel 1

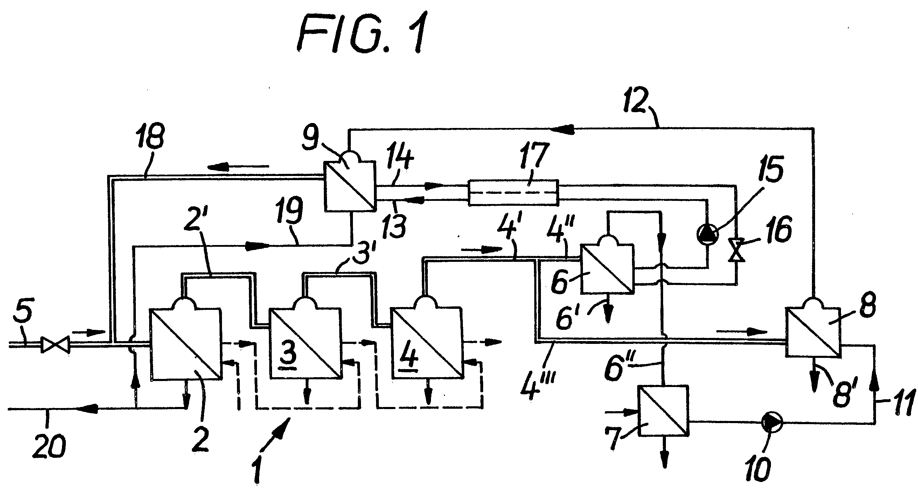

Die Frischdampftemperatur beträgt 120°C, die Brüdentemperatur nach der letzten Teilstufe des in Fig. 1 dargestellten Dreistufenverdampfers 70°C, die Kühlwasser- oder Kühllufttemperatur 15°C. Unter diesen Temperaturbedingungen beträgt die erreichbare Temperatur der im Absorber 9 zurückgewonnenen Wärme etwa 102°C, wobei als treibender Temperaturunterschied in den einzelnen Bestandteilen der neuen Vorrichtung ein Wert von 5°C angenommen wird. Falls zwischen der Frischdampftemperatur und der Brüdentemperatur ein nicht herabsetzbarer Unterschied von 50°C besteht und falls die Verfahrensbedingungen dies zulassen, empfiehlt es sich, die Frischdampftemperatur auf 135°C und damit die Brüdentemperatur auf 85°C anzuheben. In diesem Falle ist die Temperatur im Absorber 9 genügend hoch, um mit der dort abzuführenden Wärme Heizdampf mit einer Temperatur von 120°C zu erzeugen.

## Anwendungsbeispiel 2

Annahme: Die Frischdampftemperatur beträgt 100°C, die Brüdentemperatur der letzten Teilstufe des Dreistufenverdampfers 62°C, diejenige der vorletzten Teilstufe 77°C, die Kühlmitteltemperatur 15°C; die Verfahrensbedingungen für den Verdampferprozeß können nicht geändert werden. Unter der bereits erwähnten Voraussetzung, daß der treibende Temperaturunterschied jeweils 5°C beträgt, kann mit den Brüden der letzten Teilstufe nutzbare Wärme mit einer Temperatur von etwa 85°C erzeugt werden.

Um Heizdampf mit einer Temperatur von 100°C zu erhalten, führt man einen Teil der Brüden mit einer Temperatur von 77°C der letzten Teilstufe und einen weiteren Teil dieser Brüden entweder dem Austreiber 6 oder dem Verdampfer 8 zu.

Mit den die letzte Teilstufe verlassenden Brüden wird entweder der Verdampfer 8 oder der Austreiber 6 beheizt, so daß diese beiden Bestandteile auf unterschiedlichem Temperaturniveau arbeiten. Die Wahl, ob der Austreiber 6 oder der Verdampfer 8 auf dem höheren Temperaturniveau arbeiten, kann durch Auswahl des Mehrstoffgemisches beeinflußt werden.

Bei den angegebenen Temperaturverhältnissen kann im Absorber 9 Heizdampf mit einer Temperatur von 100°C erzeugt werden, der unmittelbar zur Beheizung der ersten Teilstufe des Dreistufenverdampfers verwendet werden kann.

## Anwendungsbeispiel 3

Annahme: Die Frischdampftemperatur beträgt 130°C, die Brüdentemperatur der letzten Teilstufe des Mehrstufenverdampfers 65°C, die Kühlmitteltemperatur 15°C; die Verfahrensbedingungen für den Verdampfungsprozeß können nicht geändert werden; der treibende Temperaturunterschied in den einzelnen Bestandteilen der Vorrichtung beträgt 5°C.

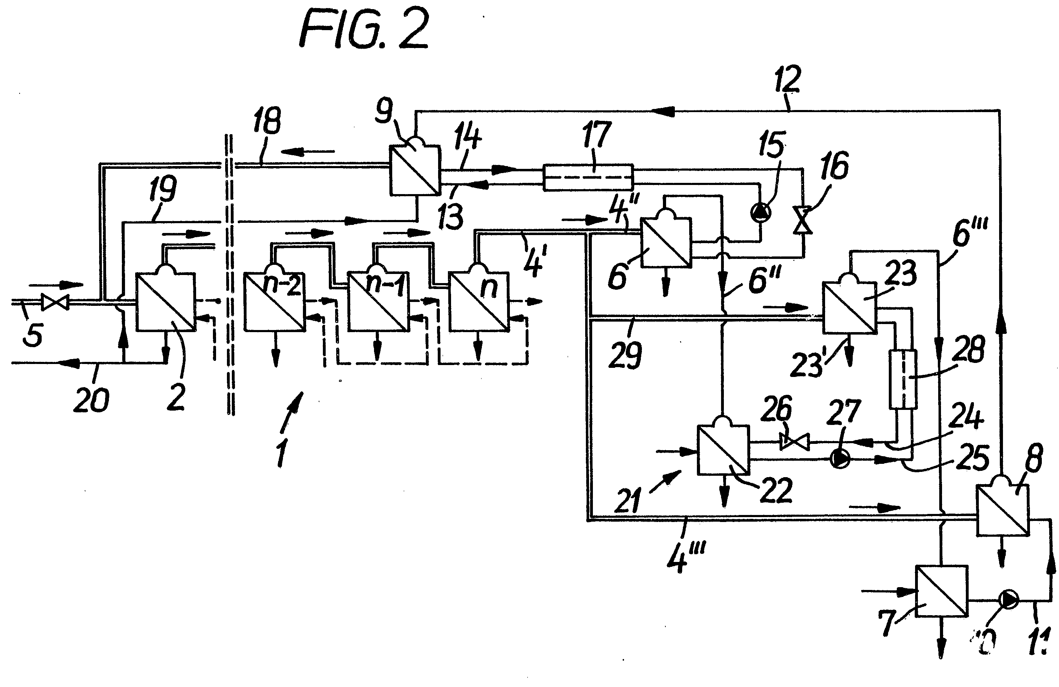

Um eine Anhebung der Temperatur von 65°C auf 130°C bewältigen zu können, muß die neu vorgeschlagene Vorrichtung — entsprechend dem in Fig. 2 dargestellten Ausführungsbeispiel — mit einem Zusatz-Wärmetransformator 21 ausgestattet sein.

Die den Austreiber 6 verlassenden dampfförmigen Leichtsiedebestandteile werden über die Leitung 6" einem Zusatz-Absorber 22 zugeführt, in dem sie bei Umgebungstemperatur von einem ungesättigten Mehrstoffgemisch absorbiert werden. Das nach dem Absorptionsvorgang gesättigte Gemisch gelangt über die Pumpe 27 und nach Wärmeaufnahme in dem Wärmetauscher 28 in einen Zusatz-Austreiber 23, in dem es durch Wärmezufuhr mittels der Zusatzleitung 29 in ein Restgemisch und dampfförmige Leichtsiedebestandteile unterteilt wird. Das Restgemisch gelangt nach Wärmeabgabe an den Wärmetauscher 28 und Drosselung mittels der Drosseleinheit 26 in den Zusatz-Absorber 22 zurück; die Leichtsiedebestandteile werden über den Kondensator 7 und den Verdampfer 8 in der bereits beschriebenen Weise in den Absorber 9 eingeleitet. In diesem kann mittels des nicht darge-stellten, integrierten Dampferzeugers Heiz-dampf mit einer Temperatur von etwa 132°C erzeugt werden. Der Druck im Absorber 9 und im Verdampfer 8 beträgt etwa 27 bar, im Kondensator 7 und im Zusatz-Austreiber 23 etwa 9 bar, indem bei 20°C gekühlten Zusatz-Absorber 22 und im Austreiber 6 etwa 3,3 bar.

Falls noch größere Unterschiede zwischen der Abwärme- und Nutzwärmetemperatur ausgeglichen werden sollen, können zusätzlich die bereits vorher erläuterten Vorschläge angewendet werden. Darüber hinaus ist es möglich, mehrere der in Fig. 2 dargestellten Zusatz-Wärmetransformatoren hintereinanderzuschalten.

Mit der hier in Rede stehenden Ausführungsform des Erfindungsgegenstandes können aus 1 kg Brüden mit einer Temperatur von 65°C etwa 0,21 kg Heizdampf mit einer Temperatur von 130°C (entsprechend 2,7 bar) erzeugt werden.

Der mit der Erfindung erzielte Vorteil besteht insbesondere darin, daß die mittels des neuen Verfahrens und mittels der neuen Vorrichtung zurückgewonnene Wärme als Heizdampf vorliegt und beim Verdampfungsprozeß selbst Verwendung finden kann. Dies hat zur Folge, daß der Aufwand an Primärenergie für den Verdampfungsprozeß, bezogen auf die Menge verdampf-ten Lösungsmittels, gegenüber Mehrstufenver-dampfern mit gleicher Teilstufenzahl erheblich herabgesetzt wird.

Von Vorteil ist es weiterhin, daß kein besonderer Brüdenkondensator mehr erforderlich ist, und daß — bedingt durch die bessere Ausnutzung des Wärmeinhalts der Brüden — der Bedarf an Kühlmitteln und die thermische Umweltbelastung herabgesetzt werden.

## Patentansprüche

1. Verfahren zum Rückgewinnen von Wärmeenergie, die in den Brüden von für thermische Stofftrennprozesse eingesetzten Mehrstufen-verdampfern enthalten ist, dadurch gekenn-zeichnet, daß mit den Brüden ein Wärmetransformator betrieben wird, dessen Arbeitsmittel durch ein Mehrstoff-Gemisch mit leicht siedenden Bestandteilen gebildet ist und in dem mittels der Wärme — die in mindestens einer Absorptionsstufe anfällt — Heizdampf gewonnen wird, welcher dem Mehrstufenverdampfer als Prozeßdampf zugeführt wird.

2. Verfahren nach Anspruch 1, dadurch gekennzeichnet, daß die Brüden zumindest einer Austreibstufe und zumindest einer Verdampfungsstufe des Wärmetransformators zugeführt werden, wobei in der Austreibstufe die leicht siedenden Bestandteile und bei gegenüber dem Druck in der Austreibstufe erhöhtem Druck in der Verdampfungsstufe die in diese eintretenden Leichtsiedebestandteile verdampft werden, und daß die unter dem höheren Druck stehenden dampfförmigen Leichtsiedebestandteile mit dem nach dem Austreibvorgang vorliegenden Rest, dem sogenannten Restgemisch, des Mehrstoffgemisches der Absorptionsstufe zugeführt werden.

3. Verfahren nach den Ansprüchen 1 bis 2, dadurch gekennzeichnet, daß das Restgemisch vor dem Eintritt in die Absorptionsstufe mittels des diese verlassenden gesättigten Mehrstoffgemisches erwärmt wird.

4. Verfahren nach den Ansprüchen 1 bis 3, dadurch gekennzeichnet, daß die dampfförmigen Leichtsiedebestandteile vor dem Eintritt in die Verdampfungsstufe zumindest einem weiteren Absorptionsabschnitt zugeführt werden, in dem ein in einer Zusatz-Absorptionsstufe erneut gesättigtes Mehrstoffgemisch in einer Zusatz-Austreibstufe in dampfförmige Leichtsiedebestandteile und ein Restgemisch aufgeteilt und aus der letzteren nach Wärmeaustausch mit dem kälteren gesättigten Mehrstoffgemisch in die Zusatz-Absorptionsstufe zurückgeführt wird.

5. Verfahren nach den Ansprüchen 1 bis 4, dadurch gekennzeichnet, daß die vor der Erzeugung des Heizdampfes eingeleiteten Ver-flüssigungsvorgänge (Kondensationsstufe, Zu-satz-Absorptionsstufe) bei Umgebungstempera-tur ablaufen.

6. Verfahren nach den Ansprüchen 1 bis 5, dadurch gekennzeichnet, daß als Mehrstoffgemisch ein Ammoniak-Wasser-Gemisch Verwendung findet.

7. Verfahren nach den Ansprüchen 1 bis 6, dadurch gekennzeichnet, daß der in einer Absorptionsstufe gewonnene Heizdampf der ersten Teilstufe des Mehrstufenverdampfers als Prozeßdampf zugeführt wird.

8. Verfahren nach den Ansprüchen 1 bis 7, dadurch gekennzeichnet, daß der Heizdampf aus zumindest einem Teilstrom des Heizdampfkondensats gewonnen wird, welches die erste Teilstufe des Mehrstufenverdampfers verläßt und in die Absorptionsstufe eingeleitet wird.

9. Verfahren nach den Ansprüchen 1 bis 8, dadurch gekennzeichnet, daß die Brüden teilweise sämtlichen Austreibstufen und teilweise der Verdampfungsstufe zugeführt werden.

10. Verfahren nach den Ansprüchen 1 bis 9, dadurch gekennzeichnet, daß die Verdampf-fungsstufe und sämtliche Austreibstufen ledig-lich mittels der Brüden der letzten Teilstufe des Mehrstufenverdampfers beheizt werden.

11. Verfahren nach den Ansprüchen 1 bis 10, dadurch gekennzeichnet, daß die Brüden unter-schiedlicher Teilstufen des Mehrstufenverdamp-fers unterschiedlichen Austreibstufen und Ver-dampfungsstufen zugeführt werden.

12. Verfahren nach Anspruch 11, dadurch gekennzeichnet, daß die Brüden — die aus einer der hinteren Teilstufen abgezogen werden — teilweise einer nachfolgenden Teilstufe und teilweise einer der beiden mittels Brüden beheizten Verfahrensstufen (Austreibstufe, Verdampfungsstufe) und die Brüden aus der nachfolgenden Teilstufe der jeweils anderen Verfahrensstufe zugeführt werden.

13. Verfahren nach den Ansprüchen 9 bis 12, dadurch gekennzeichnet, daß das Brüdenkondensat — welches die mittels Brüden beheizten, auf einem höheren Temperaturniveau arbeitenden Verfahrensstufen (Austreibstufe, Verdampfungsstufe) verläßt — entspannt und daß der dabei entstehende Dampf den entsprechenden Verfahrensstufen (Austreibstufen bzw. Verdampfungsstufen) zugeführt wird, welche auf einem niedrigeren Temperaturniveau arbeiten.

14. Vorrichtung zur Durchführung des Verfahrens nach den Ansprüchen 1 bis 13, dadurch gekennzeichnet, daß ein Austreiber (6) — in dem durch Einleiten aus einem Mehrstufenverdampfer (1) abgezogener Brüden leicht siedende Bestandteile eines Mehrstoffgemisches verdampfbar sind — über einen Kondensator (7) zur Verflüssigung der eintretenden dampfförmigen Leichtsiedebestandteile mit einem ebenfalls mittels Brüden beheizten Verdampfer (8) in Verbindung steht, der über seinen Dampfaustritt an einen Absorber (9) angeschlossen ist; daß der Austreiber (6) auf der Wärmeaufnahmeseite und der Absorber (9) auf der Wärmeabgabeseite gemeinsam eine Zuführleitung (13) für das beim Austreibvorgang entstandene Restgemisch und eine Rückführleitung (14) für das nach dem Absorptionsvorgang gesättigte Mehrstoffgemisch aufweisen, und daß der Absorber (9) auf der Wärmeaufnahmeseite mit einem Dampferzeuger ausgestattet ist, welcher über eine Heizdampfleitung (18) mit dem Mehrstufenverdampfer (1) in Verbindung steht.

15. Vorrichtung nach Anspruch 14, dadurch gekennzeichnet, daß die Verbindungsleitung (11) zwischen dem Kondensator (7) und dem Verdampfer (8) und die Zuführleitung (13) jeweils mit einer Pumpe (10 bzw. 15) ausgestattet sind und daß in der Rückführleitung (14) eine Drosseleinheit (16) vorgesehen ist.

16. Vorrichtung nach den Ansprüchen 14 bis 15, dadurch gekennzeichnet, daß in die Dampfleitung zwischen dem Austreiber (6) und dem Verdampfer (8) zumindest ein Zusatz-Wärmetransformator (21) eingebaut ist, der aus einem Zusatz-Absorber (22), einem Zusatz-Austreiber (23) und diese beiden Teile (22, 23) verbindender Zuführ- und Rückführleitung (24 bzw. 25) besteht, wobei die Zuführleitung (24) mit einer Drosseleinheit (26) und die Rückführleitung (25) mit einer Pumpe (27) ausgestattet ist.

17. Vorrichtung nach den Ansprüchen 14 bis 16, dadurch gekennzeichnet, daß jedes einen Absorber (9, 22) mit einem Austreiber (6, 23) verbindende, aus Zuführ- und Rückführleitung bestehende Leitungspaar (13, 14 bzw. 24, 25) durch einen Wärmetauscher (17 bzw. 28) hindurchgeführt ist.

18. Vorrichtung nach den Ansprüchen 14 bis 16, dadurch gekennzeichnet, daß sämtliche Austreiber (6, 23) und der Verdampfer (8) über ein Leitungssystem mit dem Brüdenaustritt ein und derselben Teilstufe des Mehrstufenverdampfers (1) in Verbindung stehen.

19. Vorrichtung nach Anspruch 18, dadurch gekennzeichnet, daß das Leitungssystem (4', 4'', 4'''; 29) mit der letzten Teilstufe (4 bzw. n) des Mehrstufenverdampfers (1) in Verbindung steht.

20. Vorrichtung nach den Ansprüchen 1 . . . 19, dadurch gekennzeichnet, daß der Dampferzeuger (Absorber 9) einerseits an die Frischdampfleitung (5) und andererseits an die Heizdampfkondensatleitung (20) der ersten Teilstufe (2) des Mehrstufenverdampfers (1) angeschlossen ist.

## Claims

1. Process for recovering thermal energy which is contained in the vapours from multi-stage evaporators used for thermal substance-separation processes, characterised in that with the vapours a heat transformer is operated the working medium of which is formed by a multi-substance mixture with low-boiling constituents and in which by means of the heat — which occurs in at least one absorption stage — heating steam is obtained which is fed as process steam to the multi-stage evaporator.

2. Process according to Claim 1, characterised in that the vapours are fed to at least one expulsion stage and at least one evaporation stage of the heat transformer, while in the expulsion stage the low-boiling constituents are evaporated and, with pressure in the evaporation stage elevated in comparison with the pressure in the expulsion stage, the low-boiling constituents entering the evaporation stage are evaporated, and in that the low-boiling constituents in vapour form subject to the higher pressure are fed with the residue present after the expulsion operation, called the residual mixture, of the multi-substance mixture to the absorption stage.

3. Process according to Claim 1 to 2, characterised in that the residual mixture, before entry into the absorption stage, is heated by means of the saturated multi-substance mixture leaving the absorption stage.

4. Process according to Claims 1 to 3, characterised in that the low-boiling constituents in vapour form are fed, before the entry into the evaporation stage, to at least one further absorption section in which a multi-substance mixture saturated anew in an additional absorption stage is divided up into low-boiling constituents of vapour form and a residual mixture in an additional expulsion stage and is returned out of the latter, after heat exchange with the colder saturated multi-substance mixture, into the additional absorption stage.

5. Process according to Claims 1 to 4, characterised in that the liquefaction actions (condensation stage, additional absorption stage) initiated before the production of the heating steam proceed at ambient temperature.

6. Process according to Claims 1 to 5, characterised in that an ammonia-water mixture is used as multi-substance mixture.

7. Process according to Claims 1 to 6, characterised in that the heating steam obtained in an absorption stage is fed as process steam to, the first component stage of the multi-stage evaporator.

8. Process according to Claims 1 to 7, characterised in that the heating steam is obtained from at least one component current of the heating steam condensate which leaves the first component stage of the multi-stage evaporator and is introduced into the absorption stage.

9. Process according to Claims 1 to 8, characterised in that the vapours are fed partially to all expulsion stages and partially to the evaporation stage.

10. Process according to Claims 1 to 9, characterised in that the evaporation stage and all expulsion stages are heated solely by means of the vapours of the last component stage of the multi-stage evaporator.

11. Process according to Claims 1 to 10, characterised in that the vapours of different component stages of the multi-stage evaporator are fed to different expulsion stages and evaporation stages.

12. Process according to Claim 11, characterised in that the vapours — which are extracted from one of the rear component stages — are fed partially to a subsequent component stage and partially to one of the two process stages (expulsion stage, evaporation stage) heated by means of vapours, and the vapours from the following component stage are fed to the other process stage in each case.

13. Process according to Claims 9 to 12, characterised in that the vapour condensate — which leaves the vapour-heated process stages (expulsion stage, evaporation stage) working at a higher temperature level — is expanded and in that the then occurring steam is fed to the corresponding process stages (expulsion stages or evaporation stages as the case may be) which work at a lower temperature level.

14. Apparatus for carrying out the process according to Claims 1 to 13, characterised in that an expeller (6) — in which low-boiling constituents of a multi-substance mixture are evaporatable by introduction of vapours withdrawn from a multi-stage evaporator (1) — is in connection through a condenser (7) for the liquefaction of the entering low-boiling constituents in vapour form with an evaporator (8) likewise heated by means of vapours, which is connected through its steam outlet to an absorber (9); in that the expeller (6) on the heat intake side and the absorber (9) on the heat delivery side comprise in common a feed conduit (13) for the residual mixture occurring in the expulsion operation and a return conduit (14) for the multi-substance mixture saturated after the absorption operation, and in that the absorber (9) is equipped on the heat intake side with a steam generator which is connected through a heating steam conduit (18) with the multi-stage evaporator (1).

15. Apparatus according to Claim 14, characterised in that the connecting conduit (11) between the condenser (7) and the evaporator (8) and the feed conduit (13) are each equipped with a pump (10 and 15 respectively) and in that a throttle unit (16) is provided in the return conduit (14).

16. Apparatus according to Claims 14 to 15, characterised in that at least one additional heat transformer (21), which consists of an additional absorber (22), an additional expeller (23) and feed and return conduits (24 and 25) connecting these two parts (22, 23), is installed into the steam conduit between the expeller (6) and the evaporator (8), the feed conduit (24) being equipped with a throttle unit (26) and the return conduit (25) with a pump (27).

17. Apparatus according to Claims 14 to 16, characterised in that each conduit pair (13, 14 and 24, 25) consisting of feed and return conduit, connecting an absorber (9, 22) with an expeller (6, 23), is conducted through a heat exchanger (17 and 28 respectively).

18. Apparatus according to Claims 14 to 16, characterised in that all expellers (6, 23) and the evaporator (8) are in connection through a conduit system with the vapour outlet of one and the same component stage of the multi-stage evaporator (1).

19. Apparatus according to Claim 18, characterised in that the conduit system (4', 4'', 4'''; 29) is in connection with the last component stage (4 or n) of the multi-stage evaporator (1).

20. Apparatus according to Claims 14 to 19, characterised in that the steam generator (absorber 9) is connected on the one hand to the live-steam conduit (5) and on the other to the heating-steam condensate conduit (20) of the first component stage (2) of the multi-stage evaporator (1).

**Revendications**

1. Procédé de récupération d'énergie thermique renfermée dans les buées des évaporateurs à effets multiples utilisés dans les procédés d'échange de masse thermique, caractérisé en ce qu'un transformateur thermique fonctionne avec les buées et que son moyen de fonctionnement est formé d'un mélange de plusieurs substances à bas point d'ébullition et qu'au moyen de la chaleur, obtenue dans au moins un étage d'absorption, il y est produit de la vapeur de chauffage, qui est envoyée, comme vapeur de traitement, à l'évaporateur à effets multiples.

2. Procédé suivant la revendication 1, caractérisé en ce que les buées sont dirigées vers au moins un étage d'éjection et au moins un étage d'évaporation du transformateur thermique, les constituants à bas point d'ébullition s'évaporant dans l'étage d'éjection et, à une pression élevée dans l'étage d'évaporation par rapport à la pression régnant dans l'étage d'éjection, ces constituants pénétrant dans l'étage d'évaporation, s'évaporant dans ce dernier et en ce que ces constituants à bas point d'ébullition étant sous forme de vapeur à la pression supérieure sont envoyés, avec le reste du mélange de plusieurs substances, dit mélange restant, provenant de l'opération d'éjection, à l'étage d'absorption.

3. Procédé suivant l'une des revendications 1 et 2, caractérisé en ce que le mélange restant est chauffé, avant l'entrée dans l'étage d'absorption, au moyen du mélange de plusieurs substances saturé quittant cet effet.

4. Procédé suivant l'une des revendications 1 à 3, caractérisé en ce que les constituants à bas point d'ébullition sous forme de vapeur sont envoyés, avant l'entrée dans l'étage d'évaporation, au moins dans un autre tronçon d'absorption, où un mélange de plusieurs substances de nouveau saturé dans un étage d'absorption supplémentaire est divisé dans un étage d'éjection supplémentaire en constituants sous forme de vapeur à bas point d'ébullition et en un mélange restant, puis renvoyé, à partir de ce dernier étage, après l'échange thermique, avec le mélange de plusieurs substances plus froid et saturé, dans l'étage d'absorption supplémentaire.

5. Procédé suivant l'une des revendications 1 à 4, caractérisé en ce que les opérations de liquéfaction (étage de condensation, étage supplémentaire d'absorption) engagées avant la production de la vapeur de chauffage se déroulent à la température ambiante.

6. Procédé suivant l'une des revendications 1 à 5, caractérisé en ce que le mélange de plusieurs substances est constitué par un mélange d'ammoniac et d'eau.

7. Procédé suivant l'une des revendications 1 à 6, caractérisé en ce que la vapeur de chauffage obtenue dans un étage d'absorption est envoyée, sous forme de vapeur de traitement, au premier effet de l'évaporateur à plusieurs effets.

8. Procédé suivant l'une des revendications 1 à 7, caractérisé en ce que la vapeur de chauffage est obtenue à partir d'au moins un courant partiel du condensat de vapeur de chauffage qui quitte le premier effet de l'évaporateur et s'engage dans l'étage d'absorption.

9. Procédé suivant l'une des revendications 1 à 8, caractérisé en ce que les buées sont envoyées en partie dans tous les étages d'éjection et en partie dans l'effet d'évaporation.

10. Procédé suivant l'une des revendications 1 à 9, caractérisé en ce que l'effet d'évaporation et tous les étages d'éjection sont chauffés seulement au moyen des buées du dernier effet de l'évaporateur à effets multiples.

11. Procédé suivant l'une des revendications 1 à 10, caractérisé en ce que les buées de différents effets de l'évaporateur à effets multiples sont envoyées dans différents étages d'éjection et différents effets d'évaporation.

12. Procédé suivant la revendication 11, caractérisé en ce que les buées qui sont prélevées d'un des effets placés à l'arrière sont envoyées en partie à un effet suivant et en partie à l'un des deux étages de procédé (étage d'éjection, étage d'évaporation) chauffés par les buées et en ce que les buées provenant de l'effet suivant sont envoyées chaque fois dans l'autre étage de procédé.

13. Procédé suivant l'une des revendications 9 à 12, caractérisé en ce que le condensat de buées, qui quitte les étages de procédé (étage d'éjection, effet d'évaporation) chauffés par les buées et travaillant à un niveau de température supérieur, se détend et que la vapeur résultante est envoyée aux étages de procédé correspondants (étages d'éjection, étages d'évaporation), qui travaillent à un niveau de température inférieure.

14. Dispositif pour la mise en oeuvre du procédé suivant l'une des revendications 1 à 13, caractérisé en ce qu'un appareil d'éjection (6), dans lequel des constituants à bas point d'ébullition d'un mélange de plusieurs substances peuvent être évaporés par introduction de buées prélevées d'un évaporateur (1) à effets multiples, est en liaison, par l'intermédiaire d'un condenseur (7) pour la liquéfaction des constituants à bas point d'ébullition introduits, avec un évaporateur (8) chauffé également au moyen de buées et raccordé, par sa sortie de vapeur, à un absorbeur (9); en ce que l'appareil d'éjection (6) et l'absorbeur (9) présentent en commun, le premier du côté de réception de la chaleur et le second du côté de cession de la chaleur, une tuyauterie d'arrivée (13) pour le mélange restant de l'opération d'éjection ainsi qu'une tuyauterie de retour (14) pour le mélange à plusieurs substances saturé après l'opération d'absorption et en ce que l'absorbeur (9) est équipé, sur le côté de réception de la chaleur, d'un générateur de vapeur, qui est relié, par l'intermédiaire d'une tuyauterie de vapeur de chauffage (18), à l'évaporateur à effets multiples (1).

15. Dispositif suivant la revendication 14, caractérisé en ce que la tuyauterie de liaison (11) disposée entre le condenseur (7) et l'évaporateur (8) ainsi que la tuyauterie d'arrivée (13) sont équipées chacune d'une pompe (10, 15) et que dans la tuyauterie de retour (14) il est prévu une unité d'étranglement (16).

16. Dispositif suivant l'une des revendications 14 et 15, caractérisé en ce que dans la tuyauterie de vapeur qui est entre l'appareil d'éjection (6) et l'évaporateur (8) il est monté au moins un transformateur thermique supplémentaire (21), qui est composé d'un absorbeur supplémentaire (22), d'un appareil d'éjection supplémentaire (23) et des tuyauteries d'arrivée et de retour (24, 25) reliant ces deux sous-ensembles (22, 23), la tuyauterie d'arrivée (24) étant équipée d'une unité d'étranglement (26) et la tuyauterie de retour (25) d'une pompe (27).

17. Dispositif suivant l'une des revendications 14 à 16, caractérisé en ce que chaque paire de tuyauteries (13, 14 et 24, 25) reliant un absorbeur (9, 22) à un appareil d'éjection (6, 23) se compose d'une tuyauterie d'arrivée et d'une tuyauterie de retour et traverse un échangeur thermique (17, 28).

18. Dispositif suivant l'une des revendications 14 à 16, caractérisé en ce que tous les appareils d'éjection (6, 23) et l'évaporateur (8) sont reliés par un système de tuyauteries à la sortie de vapeurs d'un seul et même effet de l'évaporateur à effets multiples (1).

19. Dispositif suivant la revendication 18, caractérisé en ce que le système de tuyauteries (4', 4'', 4'''; 29) est relié au dernier effet (4 ... n) de l'évaporateur à effets multiples (1).

20. Dispositif suivant l'une des revendications 14 à 19, caractérisé en ce que le générateur de vapeur (l'absorbeur 9) est raccordé d'un côté à la tuyauterie de vapeur vive (5) et d'un autre côté à la tuyauterie de condensat de vapèur de chauffage (20) du premier effet (2) de l'évaporateur à effets multiples (1).

FIG. 1

FIG. 2